(19) Europäisches Patentamt
European Patent Office
Office européen des brevets

(11) **EP 3 663 273 A1**

(12) **DEMANDE DE BREVET EUROPEEN**

(43) Date de publication:
**10.06.2020 Bulletin 2020/24**

(21) Numéro de dépôt: **18211003.1**

(22) Date de dépôt: **07.12.2018**

(51) Int Cl.:
**C04B 35/56** (2006.01)     **G04B 19/04** (2006.01)
**G04B 29/02** (2006.01)     **G04B 37/22** (2006.01)
**G04B 45/00** (2006.01)     **C04B 35/64** (2006.01)
**G04B 19/12** (2006.01)     **G04B 19/28** (2006.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **The Swatch Group Research and
Development Ltd
2074 Marin (CH)**

(72) Inventeurs:
• **Bertheville, Bernard
1950 Sion (CH)**
• **Fallet, Yann
2065 Savagnier (CH)**

(74) Mandataire: **ICB SA
Faubourg de l'Hôpital, 3
2001 Neuchâtel (CH)**

(54) **ARTICLE DECORATIF EN CERAMIQUE**

(57) L'invention concerne un article décoratif réalisé dans un matériau céramique, ledit matériau céramique comportant une phase de carbures et une phase d'oxydes, la phase de carbures étant présente dans un pourcentage en volume compris entre 50 et 95% et la phase d'oxydes étant présente dans un pourcentage en volume compris entre 5 et 50%.

La présente invention se rapporte également au procédé de fabrication par métallurgie des poudres de cet article décoratif.

Fig. 1

EP 3 663 273 A1

**Description**

DOMAINE TECHNIQUE

La présente invention se rapporte à un article décoratif et notamment à un composant d'habillage en horlogerie, réalisé dans un matériau composite en céramique. Elle se rapporte également à son procédé de fabrication.

ART ANTERIEUR

De nombreux composants d'habillage sont réalisés dans des matériaux céramiques composites ayant entre autres l'avantage de présenter des duretés très élevées qui garantissent leur aptitude à ne pas se rayer. La littérature fait surtout état de composites constitués majoritairement d'un oxyde tel que l'alumine auquel on ajoute des carbures. Il peut, par exemple, s'agir de composites comprenant en poids 70% d'$Al_2O_3$ et 30% de TiC utilisé comme renfort. Ces composites ont pour caractéristique de présenter peu ou pas d'éclat métallique comparés à d'autres matériaux tels que les aciers inoxydables ou les cermets, ce qui peut être un désavantage pour des articles décoratifs où cet éclat est recherché.

RESUME DE L'INVENTION

La présente invention a ainsi pour objet de pallier au désavantage précité en proposant un matériau céramique avec une composition adaptée pour présenter cet éclat métallique.

A cette fin, la présente invention propose un article décoratif réalisé dans une céramique comprenant majoritairement une phase de carbures et minoritairement une phase d'oxydes. Plus précisément, la présente invention propose un article décoratif réalisé dans un matériau céramique comprenant en volume une phase de carbures dans un pourcentage compris entre 50 et 95%, de préférence entre 51 et 85%, et une phase d'oxydes dans un pourcentage compris entre 5 et 50%, de préférence entre 15 et 49%.

Préférentiellement, la phase de carbures comporte un ou plusieurs carbures choisis parmi le TiC, le $Mo_2C$ et le NbC et la phase d'oxydes comporte un ou plusieurs oxydes choisis parmi l'$Al_2O_3$, le $ZrO_2$, le $Cr_2O_3$ et l'$Y_2O_3$.

Plus préférentiellement, la phase de carbures comporte majoritairement du TiC ou du $Mo_2C$ et la phase d'oxydes comporte majoritairement de l'$Al_2O_3$, de préférence en phase alpha majoritairement ou un mélange de phase alpha et de phase gamma, ou du $ZrO_2$ ; ce dernier est préférentiellement une zircone stabilisée, par exemple avec $Y_2O_3$. Selon une variante, la phase d'oxydes comportant majoritairement de l'oxyde d'aluminium comporte également minoritairement de l'oxyde de chrome. Selon un mode de réalisation préféré de l'invention, l'article décoratif comprend une phase de carbures comportant majoritairement du carbure de titane et ladite phase de carbures comportant majoritairement du carbure de titane est présente dans un pourcentage en volume compris entre 55 et 90%, de préférence entre 60 et 85%, la phase d'oxydes étant présente dans un pourcentage en volume compris entre 10 et 45%, de préférence entre 15 et 40%. Selon une variante de ce mode de réalisation ladite phase de carbures peut comporter minoritairement du carbure de niobium.

Selon un autre mode de réalisation de l'article décoratif de l'invention, l'article décoratif comprend une phase de carbures comportant majoritairement du carbure de molybdène et ladite phase de carbures comportant majoritairement du carbure de molybdène est présente dans un pourcentage en volume compris entre 50 et 75%, de préférence entre 51 et 75%, la phase d'oxydes étant présente dans un pourcentage en volume compris entre 25 et 50%, de préférence entre 25 et 49%.

Selon encore un autre mode de réalisation de l'article décoratif de l'invention, ladite phase de carbures est constituée de carbure de titane et ladite phase d'oxydes est constituée d'oxyde d'aluminium, ladite phase de carbures étant présente dans un pourcentage en volume compris entre 65 et 85, de préférence entre 70 et 80%, et ladite phase d'oxydes étant présente dans un pourcentage en volume compris entre 15 et 35%, de préférence entre 20 et 30%.

Selon encore un autre mode de réalisation de l'article décoratif de l'invention ladite phase de carbures est constituée de carbure de titane et ladite phase d'oxydes est constituée majoritairement d'oxyde d'aluminium et minoritairement d'oxyde de chrome, ladite phase de carbures étant présente dans un pourcentage en volume compris entre 55 et 75%, de préférence entre 60 et 70%, et ladite phase d'oxydes étant présente dans un pourcentage en volume compris entre 25 et 45%, de préférence entre 30 et 40%

Le matériau composite ainsi développé présente après polissage un éclat métallique semblable à celui observé dans des aciers inoxydables ou des cermets utilisant comme liant métallique le nickel ou le cobalt. Ces composites présentent pour autres avantages d'être dépourvus d'éléments allergènes tels que le Ni, d'être résistants à la corrosion et de ne pas être magnétiques. Ils possèdent également des duretés élevées et des ténacités suffisantes pour la réalisation d'éléments d'habillage. En outre, ils peuvent être mis en forme par des procédés classiques de métallurgie des poudres tels que le pressage ou l'injection afin d'obtenir des pièces «nearnet shape».

D'autres caractéristiques et avantages de la présente invention apparaîtront dans la description suivante d'un mode de réalisation préféré, présenté à titre d'exemple non limitatif en référence aux dessins annexés.

## BREVE DESCRIPTION DE LA FIGURE

La figure 1 représente une pièce d'horlogerie comprenant une carrure réalisée avec le matériau céramique selon l'invention.

La figure 2 représente une image en microscopie électronique du matériau céramique selon l'invention.

## DESCRIPTION DETAILLEE

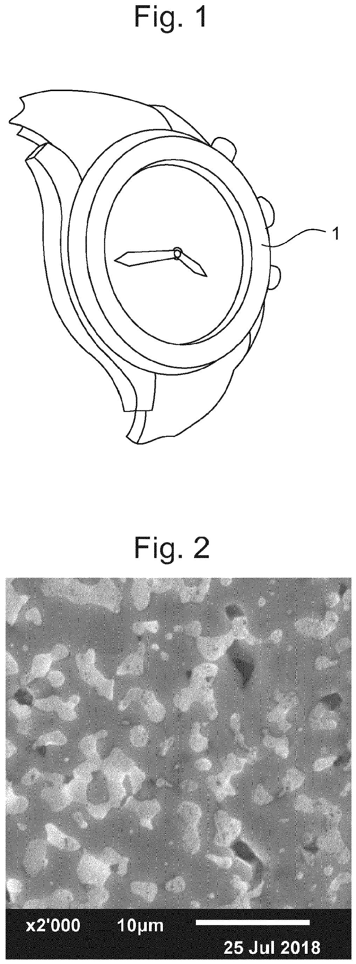

La présente invention se rapporte à un article décoratif réalisé dans un matériau composite en céramique. L'article décoratif peut être un élément constitutif de montres, bijoux, bracelets, etc. ou plus généralement une partie externe d'un élément portable comme un téléphone mobile. Dans le domaine horloger, cet article peut être une pièce d'habillage telle qu'une carrure, un fond, une lunette, un poussoir, un maillon de bracelet, un cadran, une aiguille, un index de cadran, etc. A titre illustratif, une carrure 1 réalisée avec le matériau céramique selon l'invention est représentée à la figure 1.

Le matériau céramique comporte une phase de type carbure constituant la matrice et une phase de type oxyde répartie au sein de la matrice. La phase de carbures est présente dans le matériau céramique dans un pourcentage en volume compris entre 50 et 95% et la phase complémentaire d'oxydes est présente dans un pourcentage en volume compris entre 5 et 50%. Préférentiellement, la phase de carbures est présente dans le matériau céramique dans un pourcentage en volume compris entre 51 et 85% et la phase complémentaire d'oxydes est présente dans un pourcentage en volume compris entre 15 et 49%. La phase de carbures comporte un ou plusieurs types de carbures. A titre d'exemple, il peut s'agir d'un ou plusieurs carbures choisis parmi le TiC, $Mo_2C$, NbC, WC, etc. Préférentiellement, la phase de carbures comporte un ou plusieurs carbures choisis parmi le TiC, le $Mo_2C$ et le NbC. Plus préférentiellement, la phase de carbures comporte majoritairement du TiC ou du $Mo_2C$. La phase d'oxydes peut comporter un ou plusieurs oxydes choisis à titre d'exemple parmi l'$Al_2O_3$, $ZrO_2$, $Cr_2O_3$, $Y_2O_3$, etc. Préférentiellement, la phase d'oxydes comporte un ou plusieurs oxydes choisis parmi l'$Al_2O_3$, le $ZrO_2$ et le $Cr_2O_3$. Plus préférentiellement, la phase d'oxydes comporte majoritairement de l'$Al_2O_3$ ou du $ZrO_2$.

L'article en céramique est réalisé par frittage partant d'un mélange des poudres de carbures et d'oxydes. La présente invention n'est donc pas relative à un matériau composite à matrice céramique renforcée avec une charge directionnelle telle que des fibres céramiques. Le procédé de fabrication comporte les étapes consistant à :

a) Réaliser un mélange avec les différentes poudres céramiques et ce éventuellement en milieu humide. Les poudres de départ ont préférentiellement un d50 inférieur à 45 $\mu$m. Le mélange peut éventuellement être réalisé dans un broyeur ou moulin à billes, ce qui réduit le d50 des particules de la poudre à une taille de l'ordre de quelques microns (<5$\mu$m) après broyage. Ce mélange comporte en volume entre 50 et 95% d'une poudre de carbures et entre 5 et 50% d'une poudres d'oxydes, chaque poudre comportant respectivement un ou plusieurs carbures et un ou plusieurs oxydes comme indiqué précédemment. Préférentiellement, la poudre de carbures comporte majoritairement du carbure de titane (TiC) ou du carbure de molybdène ($Mo_2C$). Elle peut, aux impuretés près, être constituée entièrement de TiC ou de $Mo_2C$. En variante, elle peut comporter du TiC ou du $Mo_2C$ et d'autres carbures tels que le NbC et le WC ; ce dernier étant présent minoritairement dans la poudre de carbures lorsque le mélange des poudres est réalisé dans un moulin utilisant des billes en WC à liant cobalt. L'ajout de carbures additionnels a pour objet de modifier les paramètres du procédé, tels que la température de frittage et/ou de modifier les propriétés obtenues. Préférentiellement, la poudre d'oxydes comporte majoritairement de l'oxyde d'aluminium ($Al_2O_3$) ou de l'oxyde de zirconium ($ZrO_2$). Elle peut, aux impuretés près, être constituée entièrement d'$Al_2O_3$ ou de $ZrO_2$. En variante, elle peut comporter de l'$Al_2O_3$ ou du $ZrO_2$ et un autre oxyde tel que du $Cr_2O_3$, ce dernier étant présent minoritairement dans la poudre d'oxydes et ayant pour objet de modifier les propriétés obtenues. A titre d'exemple, le mélange de poudres peut comporter en volume une des répartitions suivantes pour un total de 100%:

- entre 65 et 85% de TiC et entre 15 et 35% d'$Al_2O_3$,
- entre 60 et 80% de TiC, entre 2 et 10% de NbC et entre 15 et 35% d'$Al_2O_3$,
- entre 55 et 75% de TiC, entre 2 et 10% de $Cr_2O_3$ et entre 20 et 40% d'$Al_2O_3$,
- entre 70 et 90% de TiC et entre 10 et 30% de $ZrO_2$,
- entre 60 et 80% de $Mo_2C$ et entre 20 et 40% d'$Al_2O_3$,
- entre 50 et 60%, de préférence entre 51 et 60%, de $Mo_2C$ et entre 40 et 50%, de préférence entre 40 et 59%, d'$Al_2O_3$,
- entre 65 et 85% de TiC, entre 1 et 5% de $Cr_2O_3$ et entre 10 et 30% d'$Al_2O_3$.

b) Eventuellement, un deuxième mélange comprenant le mélange précité et un système de liant organique (paraffine, polyéthylène, etc.) peut être réalisé.
c) Former une ébauche en conférant au mélange la forme de l'article désiré, par exemple, par injection ou pressage.

d) Fritter l'ébauche sous atmosphère inerte à une température comprise entre 1300 et 2100°C pendant une période comprise entre 15 minutes et 20 heures. Cette étape peut être précédée d'une étape de décirage des liants organiques dans une gamme de températures comprise entre 200 et 800°C si le mélange comporte un système de liant.

L'ébauche ainsi obtenue est refroidie et polie. Elle peut également être usinée avant frittage et/ou avant polissage pour obtenir l'article désiré.

L'article issu du procédé de fabrication comporte la phase comprenant les carbures et la phase comportant les oxydes dans des pourcentages en volume proches de ceux des poudres de départ. En effet, a priori, les phases de carbures et d'oxydes coexistent sans formation de nouvelles phases lors du frittage. On ne peut cependant exclure des petites variations de compositions et de pourcentages entre les poudres de base et le matériau issu du frittage suite, par exemple, à des contaminations.

L'article a un espace colorimétrique CIELAB (conforme aux normes CIE n°15, ISO 7724/1, DIN 5033 Teil 7, ASTM E-1164) avec une composante de luminance L*, représentative de la manière dont le matériau réfléchit la lumière, comprise entre 60 et 85 et, de préférence, entre 65 et 80. Les composantes a* (composante rouge) et b* (composante jaune) peuvent être modulées à souhait en fonction du choix des oxydes. Avantageusement, les composantes a* et b* sont respectivement comprises entre -1 et 5 et entre -2 et 5. Préférentiellement, la composante a* est comprise entre -0.5 et 2 et la composante b* est comprise entre -0.5 et 3. Un matériau céramique avec un aspect métallique blanc peut être préféré. Auquel cas, les composantes a* et b* sont égales à 0.

Le matériau céramique a une dureté HV30 comprise entre 1200 et 1950 en fonction des types et des pourcentages des constituants. Il a une ténacité $K_ic$ comprise entre 2 et 8,5 MPa.m$^{1/2}$, la ténacité étant déterminée sur base des mesures des longueurs des fissures aux quatre extrémités des diagonales de l'empreinte de dureté selon la formule :

$$K_{1c} = 0.0319 \frac{P}{al^{1/2}}$$

avec P qui est la charge appliquée (N), a qui est la demi-diagonale (m) et l qui est la longueur de la fissure mesurée (m).

En particulier, le matériau céramique comprenant une phase de carbures constituée de TiC et une phase d'oxydes constituée d'Al$_2$O$_3$, aux impuretés près, présente un très bon compromis ténacité-dureté. Ainsi, lorsque cette phase de carbures est présente dans un pourcentage en volume compris entre 65 et 85, de préférence entre 70 et 80%, avec la phase complémentaire d'Al$_2$O$_3$, les valeurs HV$_{30}$ sont supérieures ou égales à 1800, voire à 1900, et les valeurs Kic sont supérieures ou égales à 3.5 MPa.m$^{1/2}$.

De même, le matériau céramique comprenant une phase de carbure constituée de TiC et une phase d'oxydes constituée d'Al$_2$O$_3$ et de Cr$_2$O$_3$, aux impuretés près, présente un très bon compromis ténacité-dureté. Ainsi, lorsque cette phase de carbures est présente dans un pourcentage en volume compris entre 55 et 75%, de préférence entre 60 et 70%, avec la phase complémentaire d'Al$_2$O$_3$ et de Cr$_2$O$_3$, les valeurs HV$_{30}$ sont supérieures ou égales à 1800 et les valeurs Kic sont supérieures ou égales à 4.5, voire à 5 MPa.m$^{1/2}$.

Les exemples ci-après illustrent le procédé selon l'invention et le matériau qui en est issu.

## Exemples

Sept mélanges de poudres ont été préparés dans un broyeur en présence d'un solvant. Les mélanges ont été réalisés sans liant. Ils ont été mis en forme par pressage et fritté sous un flux d'argon à 60 mbar à une température qui est fonction de la composition des poudres. Après frittage, les échantillons ont été enrobés et polis plan.

Des mesures de dureté HV$_{30}$ ont été réalisées en surface des échantillons et la ténacité a été déterminée sur base des mesures de duretés comme décrit précédemment.

Les valeurs colorimétriques Lab ont été mesurées sur les échantillons polis avec un spectrophotomètre KONICA MINOLTA CM-5 dans les conditions suivantes : mesures SCI (réflexion spéculaire incluse) et SCE (réflexion spéculaire exclue), inclinaison de 8°, zone de mesure MAV de 8 mm de diamètre.

Exemple 1 (80% TiC et 20% Al$_2$O$_3$ en poids)

Le mélange de poudres comporte en poids 80% TiC et 20% Al$_2$O$_3$ (en phase alpha) soit en volume respectivement 76% et 24%. L'ébauche a été frittée à 2000°C pendant 20 minutes. L'échantillon a une dureté moyenne de 1932 HV$_{30}$ et une ténacité de 4 MPa.m$^{1/2}$. Les composantes Lab sont respectivement égales à 66.3, 0.44 et 0.73.

Exemple 2 (70% TiC, 10% NbC et 20% Al$_2$O$_3$ en poids),

Le mélange de poudres comporte en poids 70% TiC, 10% NbC et 20% Al$_2$O$_3$ (en phase alpha) soit en volume respectivement 69%, 6% et 25%. L'ébauche a été frittée à 1800°C pendant 30 minutes. L'échantillon a une dureté moyenne de 1255 HV$_{30}$ et une ténacité de 3.8 MPa.m$^{1/2}$. Les composantes Lab sont respectivement égales à 63.3, 0.00 et 0.09. L'ajout de NbC permet d'abaisser la température de frittage de 200°C mais a pour effet de réduire la dureté.

**Exemple 3 (70% TiC, 25% Al$_2$O$_3$ et 5% Cr$_2$O$_3$ en poids)**

Le mélange de poudres comporte en poids 70% TiC, 25% Al$_2$O$_3$ (en phase alpha) et 5% Cr$_2$O$_3$, soit en volume respectivement 66%, 29.5% et 4.5%. L'ébauche a été frittée à 1750°C pendant 90 minutes. L'échantillon a une dureté moyenne de 1830 HV$_{30}$ et une ténacité de 5.2 MPa.m$^{1/2}$. Les composantes Lab sont respectivement égales à 64.5, 0.34 et 0.92. L'ajout de 5% de Cr$_2$O$_3$ permet d'obtenir une dureté élevée et d'augmenter la ténacité. Une image en microscopie électronique de cet échantillon est représentée à la figure 2, la phase grise représente la matrice de TiC et la phase blanche représente la phase formée d'oxydes.

**Exemple 4 (80% TiC et 20% ZrO$_2$ en poids)**

Le mélange de poudres comporte en poids 80% TiC et 20% ZrO$_2$ (zircone stabilisée contenant 3% molaire d'Y$_2$O$_3$), soit en volume respectivement 82% et 18%. L'ébauche a été frittée à 1750°C pendant 90 minutes. L'échantillon a une dureté moyenne de 1617 HV$_{30}$ et une ténacité de 2.5 MPa.m$^{1/2}$. Les composantes Lab sont respectivement égales à 66.5, -0.39 et -1.14. Le remplacement de l'oxyde d'aluminium par la zircone permet de diminuer les composantes a* et b* mais a également pour effet de diminuer la ténacité.

**Exemple 5 (85% Mo$_2$C et 15% Al$_2$O$_3$ en poids)**

Le mélange de poudres comporte en poids 85% Mo$_2$C et 15% Al$_2$O$_3$ (en phase alpha), soit en volume respectivement 72% et 28%. L'ébauche a été frittée à 1450°C pendant 90 minutes. L'échantillon a une dureté moyenne de 1319 HV$_{30}$ et une ténacité de 5.3 MPa.m$^{1/2}$. Les composantes Lab sont respectivement égales à 72.5, 0.21 et 2. Le remplacement du carbure de titane par le carbure de molybdène permet de diminuer fortement la température de frittage tout en augmentant la valeur de l'indice de luminance L*.

**Exemple 6 (70% Mo$_2$C et 30% Al$_2$O$_3$ en poids)**

Le mélange de poudres comporte en poids 70% Mo$_2$C et 30% Al$_2$O$_3$ (en phase alpha), soit en volume respectivement 51% et 49%. L'ébauche a été frittée à 1450°C pendant 90 minutes. L'échantillon a une dureté moyenne de 1417 HV$_{30}$ et une ténacité de 5.0 MPa.m$^{1/2}$. Les composantes Lab sont respectivement égales à 63.8, 0.13 et 1.49. L'augmentation de la proportion d'oxyde d'aluminium permet d'augmenter la dureté mais conduit à une baisse de l'indice de luminance L*.

**Exemple 7 (80% TiC, 18% Al$_2$O$_3$ et 2% Cr$_2$O$_3$ en poids)**

Le mélange de poudres comporte en poids 80% TiC, 18% Al$_2$O$_3$ (en phase alpha) et 2% Cr$_2$O$_3$, soit en volume respectivement 76.5%, 21.5 et 2%. L'ébauche a été frittée à 1650°C pendant 90 minutes. L'échantillon a une dureté moyenne de 1219 HV$_{30}$ et une ténacité de 7.8 MPa.m$^{1/2}$. Les composantes Lab sont respectivement égales à 65, 0.06 et 0.4. L'ajout en faible proportion d'oxyde de chrome permet d'améliorer la ténacité.

En résumé, on observe que les échantillons 1 et 3 présentent un très bon compromis ténacité-dureté avec des valeurs de dureté et de ténacité supérieures respectivement à 1800 HV$_{30}$ et 3.5 MPa.m$^{1/2}$ et que l'échantillon 7 présente une très bonne ténacité avec une valeur supérieure à 7 MPa.m$^{1/2}$.

**Revendications**

1. Article décoratif réalisé dans un matériau céramique, ledit matériau céramique comportant une phase de carbures et une phase d'oxydes, la phase de carbures étant présente dans un pourcentage en volume compris entre 50 et 95% et la phase d'oxydes étant présente dans un pourcentage en volume compris entre 5 et 50%.

2. Article selon la revendication 1, **caractérisé en ce que** la phase de carbures est majoritaire et présente dans un pourcentage en volume compris entre 51 et 85% et **en ce que** la phase d'oxydes est minoritaire et présente dans un pourcentage en volume compris entre 15 et 49%.

3. Article selon la revendication 1 ou 2, **caractérisé en ce que** la phase de carbures comporte un ou plusieurs carbures choisis parmi le carbure de titane, le carbure de molybdène, le carbure de tungstène et le carbure de niobium.

4. Article selon l'une quelconque des revendications précédentes, **caractérisé en ce que** la phase de carbures comporte majoritairement du carbure de titane ou du carbure de molybdène.

5. Article selon la revendication 4, **caractérisé en ce que** ladite phase de carbures comportant majoritairement du carbure de titane est présente dans un pourcentage en volume compris entre 55 et 90%, de préférence entre 60 et 85%, la phase d'oxydes étant présente dans un pourcentage en volume compris entre 10 et 45%, de préférence entre 15 et 40%.

6. Article selon la revendication 5, **caractérisé en ce que** ladite phase de carbures comporte minoritairement du carbure de niobium.

7. Article selon la revendication 4, **caractérisé en ce que** ladite phase de carbures comportant majoritairement du carbure de molybdène est présente dans un pourcentage en volume compris entre 50 et 75%, de préférence entre 51 et 75%, la phase d'oxydes étant présente dans un pourcentage en volume compris entre 25 et 50%, de préférence entre 25 et 49%.

**8.** Article selon l'une quelconque des revendications précédentes, **caractérisé en ce que** la phase d'oxydes comporte un ou plusieurs oxydes choisis parmi l'oxyde d'aluminium, l'oxyde de chrome, l'oxyde de zirconium et l'oxyde d'yttrium.

**9.** Article selon la revendication 8, **caractérisé en ce que** la phase d'oxydes comporte majoritairement de l'oxyde d'aluminium ou de l'oxyde de zirconium.

**10.** Article selon la revendication 9, **caractérisé en ce que** ladite phase d'oxydes comportant majoritairement de l'oxyde d'aluminium comporte également minoritairement de l'oxyde de chrome.

**11.** Article selon les revendications 5 et 9, **caractérisé en ce que** ladite phase de carbures est constituée de carbure de titane et **en ce que** ladite phase d'oxydes est constituée d'oxyde d'aluminium.

**12.** Article selon la revendication 11, **caractérisé en ce que** ladite phase de carbures est présente dans un pourcentage en volume compris entre 65 et 85, de préférence entre 70 et 80%, et **en ce que** ladite phase d'oxydes est présente dans un pourcentage en volume compris entre 15 et 35%, de préférence entre 20 et 30%.

**13.** Article selon les revendications 5 et 10, **caractérisé en ce que** ladite phase de carbures est constituée de carbure de titane et **en ce que** ladite phase d'oxydes est constituée majoritairement d'oxyde d'aluminium et minoritairement d'oxyde de chrome.

**14.** Article selon la revendication 13, **caractérisé en ce que** ladite phase de carbures est présente dans un pourcentage en volume compris entre 55 et 75%, de préférence entre 60 et 70%, et **en ce que** ladite phase d'oxydes est présente dans un pourcentage en volume compris entre 25 et 45%, de préférence entre 30 et 40%.

**15.** Article selon l'une quelconque des revendications 11 à 14, **caractérisé en ce qu'**il a une dureté $HV_{30}$ supérieure à 1800, de préférence à 1900, et **en ce qu'**il a une ténacité $K_{iC}$ supérieure ou égale à 3.5 $MPa.m^{1/2}$, de préférence à 5 $MPa.m^{1/2}$.

**16.** Article selon l'une quelconque des revendications précédentes, **caractérisé en ce qu'**il a, dans un espace colorimétrique CIELAB, une composante L* comprise entre 60 et 85 et, de préférence, entre 65 et 80.

**17.** Article selon la revendication 16, **caractérisé en ce**

qu'il a une composante a* comprise entre -1 et 5, de préférence entre -0.5 et 2, et **en ce qu'**il a une composante b* comprise entre -2 et 5, de préférence entre - 0.5 et 3.

**18.** Article selon la revendication 17, **caractérisé en ce que** les composantes a* et b* sont égales à 0.

**19.** Article selon l'une quelconque des revendications précédentes, **caractérisé en ce qu'**il s'agit d'un composant d'habillage en horlogerie choisi parmi la liste comprenant une carrure, un fond, une lunette, un poussoir, un maillon de bracelet, un cadran, une aiguille et un index de cadran.

**20.** Procédé de fabrication d'un article décoratif comprenant les étapes successives consistant à :

a) Réaliser un mélange comprenant une poudre de carbures dans un pourcentage en volume compris entre 50 et 95% et une poudres d'oxydes dans un pourcentage en volume compris entre 5 et 50%,
b) Former une ébauche en conférant audit mélange la forme de l'article,
c) Fritter l'ébauche à une température comprise entre 1300 et 2100°C pendant une période comprise entre 15 minutes et 20 heures.

**21.** Procédé de fabrication selon la revendication 20, **caractérisé en ce que** le mélange de l'étape a) comporte pour un total de 100% une des répartitions suivantes en volume:

- entre 65 et 85% de TiC et entre 15 et 35% d'$Al_2O_3$,
- entre 60 et 80% de TiC, entre 2 et 10% de NbC et entre 15 et 35% d'$Al_2O_3$,
- entre 55 et 75% de TiC, entre 2 et 10% de $Cr_2O_3$ et entre 20 et 40% d'$Al_2O_3$,
- entre 70 et 90% de TiC et entre 10 et 30% de $ZrO_2$,
- entre 60 et 80% de $Mo_2C$ et entre 20 et 40% d'$Al_2O_3$,
- entre 50 et 60% de $Mo_2C$ et entre 40 et 50% d'$Al_2O_3$,
- entre 65 et 85% de TiC, entre 1 et 5% de $Cr_2O_3$ et entre 10 et 30% d'$Al_2O_3$.

# Fig. 1

# Fig. 2

Europäisches
Patentamt

European
Patent Office

Office européen
des brevets

## RAPPORT DE RECHERCHE EUROPEENNE

Numéro de la demande

EP 18 21 1003

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KR 2014 0036924 A (MYONGJI UNIV IND & ACAD COOP [KR]; LEE KWANG HO [KR]) 26 mars 2014 (2014-03-26) | 1-5,8,9, 16-21 | INV. C04B35/56 G04B19/04 |
| Y | * alinéa [0042] * <br> * figure 5 * <br> * tableau 3 * | 6,7, 10-15 | G04B29/02 G04B37/22 G04B45/00 |
| X | -& DATABASE WPI Week 201422 Thomson Scientific, London, GB; AN 2014-F23551 XP002791328, -& WO 2014/042315 A1 (UNIV MYONGJI IND & ACAD COOP FOUND) 20 mars 2014 (2014-03-20) | 1-5,8,9, 16-21 | C04B35/64 G04B19/12 G04B19/28 |
| Y | * abrégé * | 6,7, 10-15 | |
| X | JP H08 729 B2 (ONODA CEMENT CO LTD) 10 janvier 1996 (1996-01-10) | 1-5,8,9, 16-21 | |
| Y | * abrégé * <br> * page 2, colonne droite, alinéa 3ème-4ème * <br> * page 3; exemple 18; tableau 1 * | 6,7, 10-15 | |
| | | | DOMAINES TECHNIQUES RECHERCHES (IPC) |
| Y | JP S62 153159 A (NIPPON TUNGSTEN) 8 juillet 1987 (1987-07-08) * revendication 3 * * page 352, colonne gauche, alinéa en haut * * exemples 30, 32; tableau 2 * | 6,7, 10-15 | C04B G04B G04F |
| A | EP 2 266 934 A1 (KYOCERA CORP [JP]) 29 décembre 2010 (2010-12-29) * revendications 1, 8-9 * | 11-14,21 | |

Le présent rapport a été établi pour toutes les revendications

| Lieu de la recherche | Date d'achèvement de la recherche | Examinateur |
|---|---|---|
| La Haye | 17 mai 2019 | Buffet, Noemie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                            
& : membre de la même famille, document correspondant

EPO FORM 1503 03.82 (P04C02)

**EP 3 663 273 A1**

## ANNEXE AU RAPPORT DE RECHERCHE EUROPEENNE
## RELATIF A LA DEMANDE DE BREVET EUROPEEN NO.

EP 18 21 1003

17-05-2019

| Document brevet cité au rapport de recherche | | Date de publication | Membre(s) de la famille de brevet(s) | | Date de publication |
|---|---|---|---|---|---|
| KR 20140036924 | A | 26-03-2014 | AUCUN | | |
| WO 2014042315 | A1 | 20-03-2014 | AUCUN | | |
| JP H08729 | B2 | 10-01-1996 | JP | H08729 B2 | 10-01-1996 |
| | | | JP | S6483570 A | 29-03-1989 |
| JP S62153159 | A | 08-07-1987 | JP | H0531514 B2 | 12-05-1993 |
| | | | JP | S62153159 A | 08-07-1987 |
| EP 2266934 | A1 | 29-12-2010 | EP | 2266934 A1 | 29-12-2010 |
| | | | JP | 5329529 B2 | 30-10-2013 |
| | | | JP | 2013230981 A | 14-11-2013 |
| | | | JP | WO2009119495 A1 | 21-07-2011 |
| | | | WO | 2009119495 A1 | 01-10-2009 |

EPO FORM P0460

Pour tout renseignement concernant cette annexe : voir Journal Officiel de l'Office européen des brevets, No.12/82